# EUROPEAN PATENT APPLICATION

(11) **EP 2 405 519 A1**
(43) Date of publication of application: **11.01.2012**
(21) Application number: 10748774.6
(22) Date of filing: 03.03.2010
(51) Int. Cl.: H01M 10/052, H01M 2/16, H01M 4/13, H01M 10/0566

(54) **NONAQUEOUS ELECTROLYTE CELL**

(30) Priority: 03.03.2009 JP 2009049424
(71) Applicant: Shin-Kobe Electric Machinery Co., Ltd., Tokyo 104-0044 (JP)
(72) Inventor: TSUJIKAWA, Tomonobu, Tokyo 108-0023 (JP); MATSUSHIMA, Toshio, Tokyo 108-0023 (JP); ICHIMURA, Masahiro, Tokyo 110-0015 (JP); OGATA, Tsutomu, Tokyo 110-0015 (JP); ARAKAWA, Masayasu, Tokyo 110-0015 (JP); YABUTA, Kahou, Tokyo 108-0023 (JP); MATSUSHITA, Takashi, Tokyo 108-0023 (JP); KURITA, Kenji, Tokyo 104-0044 (JP); TERADA, Masayuki, Tokyo 104-0044 (JP); HAYASHI, Koji, Tokyo 104-0044 (JP); ITOH, Youhei, Tokyo 104-0044 (JP); ISHIZAKI, Yuki, Tokyo 104-0044 (JP)
(74) Representative: Viering, Jentschura & Partner
(86) International application number: PCT/JP2010/053428
(87) International publication number: WO 2010/101180

(57) **Abstract**

A non-aqueous electrolyte battery capable of making behavior of the battery calm at a time of battery abnormality to secure safety is provided. In a lithium-ion secondary battery 20, an electrode group 6 is accommodated in a cylindrical battery container 7 having a bottom. A positive electrode plate and a negative electrode plate are wound via separators W5 to form the electrode group 6. The positive electrode plate has an aluminum foil W1 as a positive electrode collector. A positive electrode mixture including a lithium transition metal complex oxide as a positive electrode active material is applied to both surfaces of the aluminum foil W1 to form a positive electrode mixture layer W2. A flame retardant layer W6 containing a flame retardant is formed at a surface of the positive electrode mixture layer W2. The negative electrode plate has a rolled copper foil W3 as a negative electrode collector. A negative electrode mixture including a carbon material as a negative electrode active material is applied to both surfaces of the rolled copper foil W3 to form a negative electrode mixture layer W4. The flame retardant decomposes under a high temperature environment such as battery abnormality or the like.

## Description

### FIELD OF THE INVENTION

The present invention relates to a non-aqueous electrolyte battery, and particularly relates to a non-aqueous electrolyte battery where a positive electrode plate that a positive electrode mixture including an active material is applied to a collector and a negative electrode plate that a negative electrode mixture including an active material is applied to a collector are disposed via porous separators.

### DESCRIPTON OF RELATED ART

As a secondary battery of which electrolytic solution is an aqueous solution, an alkaline battery, a lead battery or the like is known. In place of such an aqueous solution battery, a non-aqueous electrolyte battery which is small, light-weighted and has high energy density and which is represented by a lithium secondary battery is being widely used. Organic solvent such as dimethyl ether or the like is included in an electrolytic solution used for the non-aqueous electrolyte battery. Because organic solvent has a property of inflammability, in a case that the battery falls into an abnormal state such as shortcut and the like or that a battery temperature goes up when it is thrown into fire, behavior of the battery may become violent due to burning of battery constituting material or a thermal decomposition reaction of active material.

In order to avoid such a situation, various safety techniques have been proposed to secure safety of the battery. For example, a technique for making a battery non-flammable by dissolving a flame retardant (non-flammability giving material) into a non-aqueous electrolytic solution (see JP04-184870A), and a technique for making (a) separator (s) non-flammable by dispersing a flame retardant into the separator(s) (see JP2006-127839A) are disclosed.

However, the techniques disclosed in JP04-184870A and JP2006-127839A are techniques for making the non-aqueous electrolytic solution which contains the flame retardant non-flammable itself and making the separator which is battery constituting material non-flammable itself, and accordingly it is difficult for making the battery per se. non-flammable. For example, in the technique disclosed in JP2006-127839A, the separator itself can obtain non-flammability according to an amount of the flame retardant contained in the separator. In a case that this technique is applied to the lithium secondary battery, because heat generation becomes large due to a thermal decomposition reaction of active material in the lithium secondary battery, a large amount of the flame retardant becomes necessary in order to restrict an increase in a temperature. Further, it may cause a drawback in that it is difficult for retaining strength originally required as a separator in a case that the separator contains the large amount of the flame retardant.

### SUMMARY OF THE INVENTION

In view of the above circumstances, the present invention is to provide a non-aqueous electrolyte battery capable of making behavior of the battery calm at a time of battery abnormality to secure safety.

In order to achieve the above object, the present invention is directed to a non-aqueous electrolyte battery where a positive electrode plate that a positive electrode mixture including an active material is applied to a collector and a negative electrode plate that a negative electrode mixture including an active material is applied to a collector are disposed via porous separators, wherein a flame retardant layer containing a flame retardant which decomposes at a predetermined temperature is disposed at one side or both sides of at least one kind of the positive electrode plate, the negative electrode plate and the separators.

In the present invention, since the flame retardant exists at a neighborhood of the active material due to that the flame retardant layer containing the flame retardant is disposed at one side or both sides of at least one kind of the positive electrode plate, the negative electrode plate and the separators, when the battery temperature goes up at the time of battery abnormality, the flame retardant decomposes at a predetermined temperature to restrict burning of battery constituting material, and accordingly it is possible to make behavior of the battery calm to secure safety.

In the present invention, it is preferable that the flame retardant layer has lithium-ion permeability. At this time, the flame retardant layermayhave a porous structure. Further, it is preferable that the flame retardant is a solidbodyunder a temperature environment of 80 deg. C. or less. Such a flame retardant may be a phosphazene chemical compound. Further, it is preferable that the flame retardant is contained at a ratio of 10 wt% or more to the positive electrode mixture. At this time, the flame retardant may be contained at a ratio of 20 wt% or less to the positive electrode mixture. Furthermore, the active material included in the positive electrode mixture can be a lithium transition metal complex oxide. At this time, the active material included in the negative electrode mixture may be a carbon material in/from which lithium-ions can be occluded/released. A battery capacity may be not less than 3 Ah.

According to the present invention, effects can be obtained that since the flame retardant exists at a neighborhood of the active material due to that the flame retardant layer containing the flame retardant is disposed at one side or both sides of at least one kind of the positive electrode plate, the negative electrode plate and the separators, when the battery temperature goes up at the time of battery abnormality, the flame retardant decomposes at a predetermined temperature to restrict burning of battery constituting material, and accordingly it is possible to make behavior of the battery calm to secure safety.

### BRIEF DESCRIPTION OF THE DRAWING

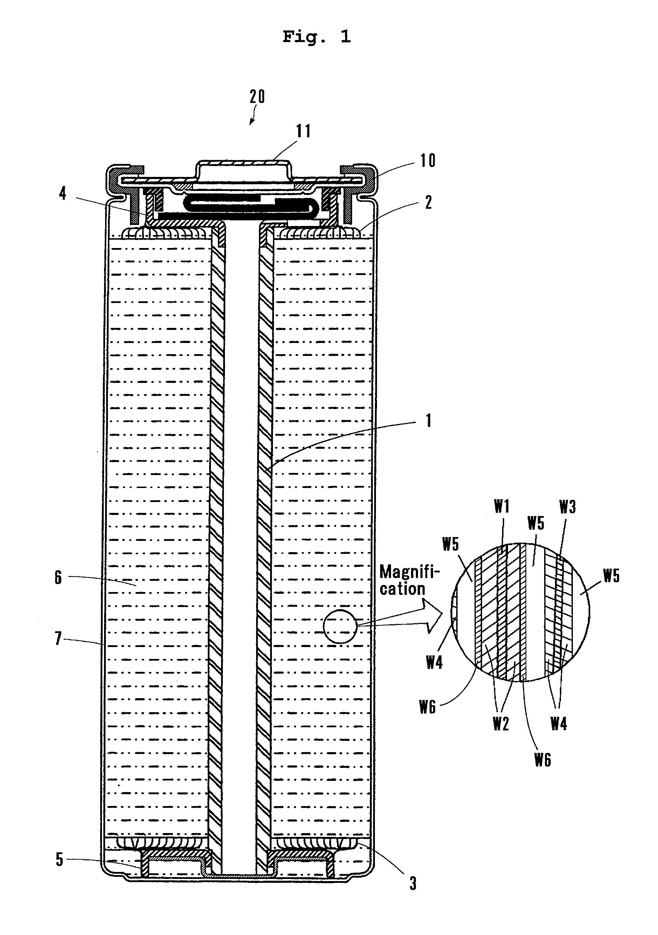

Fig. 1 is a sectional view of a cylindrical lithium-ion secondary battery of an embodiment to which the present invention is applicable.

### DETAILED DESCRIPTION OF THE PREFERRED EMBODIMENTS

With reference to the drawing, an embodiment in which the present invention is applied to a cylindrical lithium-ion secondary battery to be mounted on a hybrid electric vehicle will be explained below.

As shown in Fig. 1, a cylindrical lithium-ion secondary battery 20 (non-aqueous electrolyte battery) of this embodiment has a cylindrical battery container 7 made of nickel plated steel and having a bottom, and an electrode group 6 which is formed by winding a strip-shaped positive electrode plate and a strip-shaped negative electrode plate spirally through separators.

A hallow cylindrical rod core 1 made of polypropylene is used for a winding center of the electrode group 6. A positive electrode collecting ring 4 which is a ring shaped conductor and which is used for collecting electric potential from the positive electrode plate is disposed at an upper side of the electrode group 6 approximately on an extension line of the rod core 1. The positive electrode collecting ring 4 is fixed to an upper end portion of the rod core 1. Each end portion of positive electrode lead pieces 2 led from the positive electrode plate is welded by ultrasonic welding to a peripheral face of a flange portion extended integrally from a periphery of the positive electrode collecting ring 4. A disc shaped battery lid 11 which houses a safety valve and which functions as a positive electrode external terminal is disposed at an upper side of the positive electrode collecting ring 4. An upper portion of the positive electrode collecting ring 4 is connected to the battery lid 11 via a conductor lead.

On the other hand, a negative electrode collecting ring 5 which is a ring shaped conductor and which is used for collecting electric potential from the negative electrode plate is disposed at a lower side of the electrode group 6. An outer circumference of a lower end of the rod core 1 is fixed to an inner circumference of the negative electrode collecting ring 5. Each end portion of negative electrode lead pieces 3 led from the negative electrode plate is welded to an outer periphery of the negative electrode collecting ring 5. A lower portion of the negative electrode collecting ring 5 is connected to an inner bottom portion of the battery container 7 via a conductor lead. In this embodiment, an outer diameter of the battery container 7 is set to 40mm and an inner diameter thereof is set to 39mm.

The battery lid 11 is fixed by performing caulking via a gasket 10 made of EPDM having insulation and heat resisting properties at an upper portion of the battery container 7. For this reason, an interior of the lithium-ion secondary battery 20 is sealed. A non-aqueous electrolytic solution is injected to the battery container 7. Lithium hexafluorophosphate (LiPF₆) as a lithium salt, dissolved at 1 mole/liter into mixed solvent of ethylene carbonate (EC), dimethyl carbonate (DMC) and diethyl carbonate (DEC) mixed at a volume ratio of 1:1:1, is used for the non-aqueous electrolytic solution. Incidentally, the lithium-ion secondary battery 20 is given a function as a battery by carrying out initial charge with a predetermined voltage and current.

The electrode group 6 is made in a manner that the positive electrode plate and the negative electrode plate are wound together via polyethylene-made separators W5 through which lithium-ions can pass around the rod core 1 such that both the electrode plates do not come in direct contact with each other. In this embodiment, a thickness of each of separators W5 is set to 30µm. The positive electrode lead pieces 2 and the negative electrode lead pieces 3 are respectively positioned at both end faces opposed to each other with respect to the electrode group 6. In this embodiment, the lengths of the positive electrode plate, the negative electrode plate and the separators W5 are adjusted in order to set a diameter of the electrode group 6 to 38 ± 0.5mm. Insulating covering or coating is applied to all of the circumference of the electrode group 6 and the peripheral face of the flange portion of the positive electrode collecting ring 4 in order to prevent electric contact between the electrode group 6 and the battery container 7. An adhesive tape having a base member made of polyimide and adhesive agent made of hexameta-acrylate applied to one surface thereof is used for the insulating covering. The adhesive tape is wound at least one time from a peripheral surface of the flange portion to an outer peripheral surface of the electrode group 6. The winding number is adjusted so that a maximum diameter portion of the electrode group 6 is set as an insulating covering existence portion, and the maximum diameter is set to be slightly smaller than the inner diameter of the battery container 7.

The positive electrode plate constituting the electrode group 6 has an aluminum foil W1 as a positive electrode collector. In this embodiment, a thickness of the aluminum foil is set to 20µm. A positive electrode mixture including a lithium transition metal complex oxide as a positive electrode active material is applied to both surfaces of the aluminum foil W1 approximately uniformly and homogeneously to form a positive electrode mixture layer W2. Namely, a thickness of the applied positive electrode mixture layer W2 is approximately uniform and the positive electrode mixture is dispersed in the positive electrode mixture layer W2 approximately uniformly. Either lithium manganese nickel cobalt complex oxide powder having a layered crystal structure or lithiummanganate powder having a spinel crystal structure is used for the lithium transition metal complex oxide. For example, 8 weight parts of scale-shaped graphite and 2 weight parts of acetylene black as a conductive material, and 5 weight parts of polyvinylidene fluoride (hereinafter abbreviated as PVdF) as a binder, to 85 weight parts of the lithium transition metal complex oxide, are mixed in the positive electrode mixture. N-methyl-2-pyrolidone (hereinafter abbreviated as NMP) as dispersion solvent is used for applying the positive electrode mixture to the aluminum foil W1. A non-applied portion of the positive electrode mixture, with a width of 30mm, is formed at one side edge along a longitudinal direction of the aluminum foil W1. The non-applied portion is notched like a comb, and the positive electrode lead pieces 2 are formed by notched remaining portions thereof. A distance or an interval between the adjacent positive electrode lead pieces 2 is set to 20mm and a width of each of positive electrode lead pieces 2 is set to 5mm. The positive electrode plate, after drying, is pressed and then cut to have a width of 80mm.

A flame retardant layer W6 containing a flame retardant is formed at a surface of the positive electrode mixture layer W2, namely, at both surfaces of the positive electrode plate. The flame retardant layer W6 is made porous so that it has a property of lithium-ion permeability by mixing a pore former (pore forming material) thereto. A phosphazene compound of which main constituents are phosphorus and nitrogen is used for the flame retardant. In this embodiment, a mixing percentage of the flame retardant is set to 1 wt% or more to the positive electrode mixture. Further, aluminum oxide is used for the pore former. The mixing percentage of the aluminum oxide can be adjusted according to the percentage of pores formed at the flame retardant layer W6. The flame retardant layer W6 of this embodiment is formed as follows. Namely, the aluminum oxide is dispersed to NMP solution into which a phosphazene (chemical) compound and PVdF as a binder are dissolved. Obtained dispersed solvent is applied to the surface of the positive electrode mixture layer W2, and the positive electrode plate, after drying, is pressed in order to adjust a thickness thereof as a whole.

The phosphazene compound is a ring compound expressed by a general formula of (NPR₂)₃ or (NPR₂)₄. R in the general formula expresses halogen such as fluorine, chlorine and the like or univalent substituent. As the univalent substituent, alkoxy group such as methoxy group, ethoxy group and the like, aryloxyl group such as phenoxy group, methylphenoxy group and the like, alkyl group such as methyl group, ethyl group and the like, aryl group such as phenyl group, tolyl group and the like, amino group including substitutional amino group such as methylamino group and the like, alkylthio group such as methylthio group, ethylthio group and the like, and arylthio group such as phenylthio group and the like may be listed. Such a phosphazene compound has a solid or liquid body (form) according to a kind of substituent. In this embodiment, a phosphazene compound having a solid body under a temperature environment of 80 deg. C or less is used. Further, such phosphazene compounds decompose under a predetermined temperature, respectively.

On the other hand, the negative electrode plate has a rolled copper foil W3 as a negative electrode collector. In this embodiment, a thickness of the rolled copper foil W3 is set to 10µm. A negative electrode mixture layer W4 including carbon powder served as a negative electrode active material in/from which lithium-ions can be occluded/released (intercalated/deintercalated) is applied to both surfaces of the rolled copper foil W3 approximately uniformly and homogeneously in the same manner as the positive electrode plate. In this embodiment, amorphous carbon power is used for the negative electrode active material. For example, 10 weight parts of PVdF as a binder is added, to 90 weight parts of the amorphous carbon powder, in the negative electrode mixture. NMP as dispersion solvent is used for applying the negative electrode mixture to the rolled copper foil W3. A non-applied portion of the negative electrode mixture, with a width of 30mm, in the same manner as the positive electrode plate, is formed at one side edge along a longitudinal direction of the rolled copper foil W3 to form the negative electrode lead pieces 3. A distance between the adjacent negative electrode lead pieces 3 is set to 20mm and a width of each of negative electrode lead pieces 3 is set to 5mm. The negative electrode plate, after drying, is pressed and then cut to have a width of 86mm. Incidentally, a length of the negative electrode plate is set, when the positive electrode plate and the negative electrode plate are wound, 120mm longer than that of the positive electrode plate such that the positive electrode plate does not go beyond the negative electrode plate in a winding direction at innermost and outermost winding circumferences. Besides, a width of the negative electrode mixture layer W4 (applied portion of the electrode mixture) is set 6mm longer than that of the positive electrode mixture layer W2 such that the positive electrode mixture layer W2 does not go beyond the negative electrode mixture layer W4 in a winding direction and a vertical direction.

### (Examples)

Next, Examples of the lithium-ion secondary battery 20 manufactured according to the above embodiment will be explained below. Incidentally, a lithium-ion secondary battery of Control (Comparative Example) manufactured for making a comparison with Examples will also be explained.

### <Example 1>

In Example 1, dispersed solution in which the aluminum oxide was dispersed to NMP solution into which a phosphazene compound served as a flame retardant (made by BRIDGESTONE CORP., Product Name: Phoslight (Registered Trademark), solid body, decomposition temp. : 250 deg. C. or more) and PVdF were dissolved, was produced. This dispersed solution was applied to the surface of the positive electrode mixture layer W2. At this time, the mixing percentage of the flame retardant to the positive electrode mixture was adjusted by controlling an applying amount of the dispersed solution. As shown in Table 1 below, the mixing percentage (ratio) of the flame retardant was set to 1 wt%.

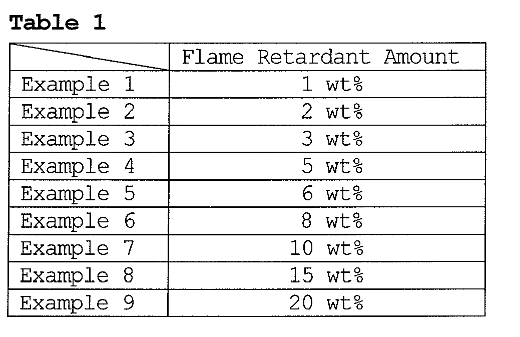

### <Examples 2 to 9>

As shown in Table 1, in Examples 2 to 9, the battery was manufactured in the same manner as Example 1 except a change in the mixing percentage of the flame retardant. Namely, the mixing percentage of the flame retardant was set to 2 wt% in Example 2, 3 wt% in Example 3, 5 wt% in Example 4, 6 wt% in Example 5, 8 wt% in Example 6, 10 wt% in Example 7, 15 wt% in Example 8 and 20 wt% in Example 9, respectively.

### <Control>

As shown in Table 1, in Control, the battery was manufactured in the same manner as Example 1 except that the flame retardant layer W6 was not formed at the surface of the positive electrode mixture layer W2. Namely, the lithium-ion secondary battery of Control is a conventional battery.

### (Test)

Overcharge test was carried out for evaluation with respect to each of the lithium-ion secondary batteries of Examples and Control. In the overcharge test, a thermocouple was disposed at a center of each of the lithium-ion secondary batteries to measure a temperature at each surface of the batteries when the batteries were being overcharged at a current value of 0.5C. Table 2 below shows the highest temperature of each surface of the batteries in the overcharge test.

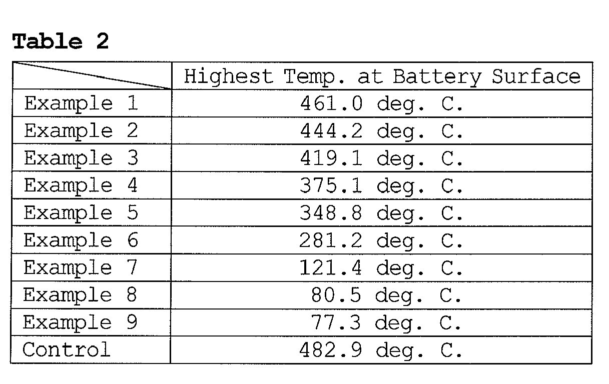

As shown in Table 2, in the lithium-ion secondary battery of Control in which the flame retardant was not contained, the highest temperature at the battery surface reached 482.9 deg. C. according to the overcharge test. While, it is understood that, in the lithium-ion secondary batteries of Examples 1 to 9 in which the flame retardant is contained, the highest temperature at each of the battery surfaces is lowered and that the lowering percentage of the highest temperature becomes large by making the mixing percentage of the flame retardant large. If the flame retardant is mixed at the mixing percentage of 1 wt% to the positive electrode mixture (Example 1), the lithium-ion secondary battery can lower the highest temperature at a battery surface thereof comparing with the lithium-ion secondary battery of Control. When a thermal decomposition reaction of active material or a chain reaction thereof is taken into account, it is preferable that the highest temperature at the battery surface is controlled at approximately 150 deg. C. or less. This can be attained by setting the mixing percentage of the flame retardant to 10 wt% or more (Example 7).

### (Effects and the like)

Next, effects and the like of the lithium-ion secondary battery 20 according to this embodiment will be explained.

In this embodiment, the flame retardant layer W6 in which the phosphazene compound served as a flame retardant is contained is formed at the surface of the positive electrode mixture layer W2 of the positive electrode plate which constitutes the electrode group 6. This phosphazene compound decomposes at the predetermined temperature under a high temperature environment such as the time of battery abnormality or the like. The phosphazene compound exists at a neighborhood of the positive electrode active material because the flame retardant layer W6 is formed at the surface of the positive electrode mixture layer W2. For this reason, in a case that the lithium-ion secondary battery 20 is exposed to an abnormally high temperature environment or that it is fallen into battery abnormality, when the battery temperature goes up due to a thermal decomposition reaction of the positive electrode active material or a chain reaction thereof, the phosphazene compound decomposes. Thus, since the burning of battery constitutingmaterial is restricted, it is possible to make battery behavior calm to secure safety of the lithium-ion secondary battery 20.

Further, in this embodiment, the pores are formed in the flame retardant layer W6 to make the layer porous. For this reason, lithium-ions can move sufficiently between the positive and negative electrode plates at a time of normal battery use (discharging/charging) to secure battery performance. Besides, because the flame retardant layer W6 is formed at the surface of the positive electrode mixture layer W2, the mixing percentage of the positive electrode active material which causes an electrode reaction can be secured. Accordingly, the capacity or output of the lithium-ion secondary battery 20 can be secured.

Furthermore, in this embodiment, the phosphazene compound which is a solid body under the temperature environment of 80 deg. C. or less is used as a flame retardant. For this reason, since the phosphazene compound does not decompose at the time of normal battery use to be retained as the flame retardant layer W6, the battery performance of the lithium-ion secondary battery 20 can be secured.

Incidentally, in this embodiment, an example that the flame retardant layer W6 is formed at the surface of the positive electrode mixture layer W2, namely, both surfaces of the positive electrode plate was shown, however, the present invention is not limited to this. For example, the flame retardant layer W6 may be formed at the negative electrode plate or the separators W5. That is, the flame retardant layer W6 may be formed at one surface or both surfaces of at least one of the positive electrode plate, the negative electrode plate and the separators W5. Further, in this embodiment, an example that PVdF was used as a binder in order to form the flame retardant layer W6, however, the present invention is not limited the same. Any kind of binder may be used to form the flame retardant layer W6.

Further, in this embodiment, an example that the aluminum oxide is mixed as a pore former at the time of forming the flame retardant layer W6 was shown, however, the present invention is not restricted to this. The pore former to be used may not be limited if only the flame retardant layer W6 is made porous so that lithium-ions can pass through at the time of normal discharging/charging.

Furthermore, in this embodiment, an example that the percentage for mixing the flame retardant to the flame retardant layer W6 is set to 1 wt% or more was shown (Examples 1 to 9). If the mixing percentage of the flame retardant is less than 1 wt%, it is difficult to control a temperature increase due to a thermal decomposition reaction. To the contrary, if the mixing percentage of the flame retardant exceeds 20 wt%, because a thickness of the flame retardant layer W6 becomes large relatively, it causes lowering of capacity or output. For the reasons, it is preferable that the mixing percentage of the flame retardant is set in a range of from 1 to 20 wt%. Further, it is more preferable that the mixing percentage of the flame retardant is set to 10 wt% or more, when a further increase in a temperature due to the chain reaction of the thermal decomposition reaction is taken into consideration.

Furthermore, in this embodiment, an example of the phosphazene compound was explained as a flame retardant, however, the present invention is not limited to this. Any flame retardant may be used if it decomposes at a predetermined temperature to restrict a temperature increase due to a thermal decomposition reaction or a chain reaction thereof. Further, with respect to the phosphazene compound, a compound other than the compound exemplified in this embodiment may be used.

Moreover, in this embodiment, an example of the cylindrical lithium-ion secondary battery 20 to be mounted on a hybrid electric vehicle was shown, however, the present invention is not confined to the same. The present invention may be applied to a large lithium-ion secondary battery having a battery capacity of approximately 3 Ah or more. Further, in this embodiment, an example of the electrode group 6 that the positive electrode plate and the negative electrode plate are wound via the separators was shown, however, the present invention is not limited to this. For example, the present invention may be applied to an electrode group that rectangular positive and negative electrodes are layered. Furthermore, with respect to a battery shape, it goes without saying that a square shape or the like may be employed other than the cylindrical shape. Further, the present invention is not particularly limited to a kind of the positive electrode active material or the negative electrode active material, composition of the non-aqueous electrolytic solution or the like.

Further, in this embodiment, an example that either lithium manganese nickel cobalt complex oxide powder having a layered crystal structure or lithium manganate powder having a spinel crystal structure is used for the lithium transition metal complex oxide was shown, however, the positive electrode active material usable in the present invention may be a lithium transition metal complex oxide. Further, it goes without saying that the present invention is not limited to the lithium-ion secondary battery, and the present invention is applicable to a non-aqueous electrolyte battery using a non-aqueous electrolytic solution.

### (Industrial Applicability)

Because the present invention provides the non-aqueous electrolyte battery capable of making behavior of the battery calm at a time of battery abnormality to secure safety, the present invention contributes to manufacturing and marketing of a non-aqueous electrolyte battery. Accordingly, the present invention has industrial applicability.

## Claims

1. A non-aqueous electrolyte battery where a positive electrode plate that a positive electrode mixture including an active material is applied to a collector and a negative electrode plate that a negative electrode mixture including an active material is applied to a collector are disposed via porous separators, wherein a flame retardant layer containing a flame retardant which decomposes at a predetermined temperature is disposed at one side or both sides of at least one kind of the positive electrode plate, the negative electrode plate and the separators.

2. The non-aqueous electrolyte battery according to claim 1, wherein the flame retardant layer has lithium-ion permeability.

3. The non-aqueous electrolyte battery according to claim 2, wherein the flame retardant layer has a porous structure.

4. The non-aqueous electrolyte battery according to claim 1, wherein the flame retardant is a solid body under a temperature environment of 80 deg. C. or less.

5. The non-aqueous electrolyte battery according to claim 4, wherein the flame retardant is a phosphazene chemical compound.

6. The non-aqueous electrolyte battery according to claim 1, wherein the flame retardant is contained at a ratio of 10 wt% or more to the positive electrode mixture.

7. The non-aqueous electrolyte battery according to claim 6, wherein the flame retardant is contained at a ratio of 20 wt% or less to the positive electrode mixture.

8. The non-aqueous electrolyte battery according to claim 1, wherein the active material included in the positive electrode mixture is a lithium transition metal complex oxide.

9. The non-aqueous electrolyte battery according to claim 8, wherein the active material included in the negative electrode mixture is a carbon material in/from which lithium-ions can be occluded/released.

10. The non-aqueous electrolyte battery according to claim 9, wherein a battery capacity is not less than 3 Ah.
